# EUROPEAN PATENT SPECIFICATION

(11) **EP 2 375 179 B1**
(45) Date of publication and mention of the grant of the patent: **25.03.2015**
(21) Application number: 10781397.4
(22) Date of filing: 08.01.2010
(51) Int. Cl.: F24D 3/18, F24D 19/00, F24D 19/10, F24F 11/00, F24F 3/06

(54) **RADIATOR**
HEIZKÖRPER
RADIATEUR

(43) Date of publication of application: 12.10.2011
(73) Proprietor: Daikin Industries, Ltd., Osaka 530-8323 (JP); Daikin Europe N.V., 8400 Oostende (BE)
(72) Inventor: NAKAI, Akinori, Kusatsu-shi Shiga 525-8526 (JP); MOCHIZUKI, Katsuki, Oostende 8400 (BE)
(74) Representative: Hoffmann Eitle
(86) International application number: PCT/JP2010/000095
(87) International publication number: WO 2011/083516

(56) References cited:
- EP-A1- 1 496 316
- EP-A2- 1 113 231
- EP-A2- 1 555 492
- EP-A2- 1 624 257
- JP-A- 2001 215 037
- JP-A- 2007 255 851

## Description

### TECHNICAL FIELD

The present invention relates to a radiator that cools and/or heats by sucking cold water or hot water from a heat source unit into a heat exchanger.

### BACKGROUND ART

In the conventional art, a radiator that cools and/or heats is known wherein cold water or hot water is sucked from a heat source unit into a heat exchanger. For example, JP-A-2002-98344 discloses a radiator in an air conditioning system, wherein the radiator comprises a heat exchange coil (corresponding to the heat exchanger) and a ventilation fan. In this air conditioning system, cooling and heating are performed by supplying cold water and hot water, respectively, to a supply piping, which is connected to a heat exchange coil (corresponding to the heat exchanger).

### SUMMARY OF THE INVENTION

### <Technical Problem>

Nevertheless, in the air conditioning system disclosed in JP-A-2002-98344, the cold water or the hot water is supplied to the supply piping such that an indoor temperature or an outdoor temperature reaches a preset set temperature. Consequently, the cold water or the hot water might be supplied to the supply piping even if, for example, the temperature of the cold water or the hot water exceeds the working range of the heat exchange coil. Accordingly, if, for example, the cold water or the hot water of a temperature that exceeds the working range of the heat exchange coil is supplied to the supply piping, then there is a risk that the heat exchange coil will break. Furthermore, JP-A-2001-215037 which forms the basis for the preamble of claim 1 discloses a device which may on the one hand prevent faulty wiring of temperature sensors and valves to the controller. This is particularly achieved in that only one of the valves is opened wherein one of the temperature sensors encompasses a temperature change. That sensor which encompasses the temperature change is then correlated to the opened valve, whereas the other temperature sensor is correlated to the closed valve. On the other hand, this document provides a process for enabling the control to automatically judge which of the valves is capable of performing heating and which cooling operation. In this context, the temperature measured by the temperature sensors is compared with a threshold for cooling and a threshold for heating. If the measured temperature is between the two thresholds, the control concludes that neither cooling nor heating is possible with this particular valve. If the temperature exceeds the threshold for warm water, the control concludes that this valve can be used for heating whereas if the temperature detected is below the threshold for cold water, the control concludes that this particular valve can be used for cooling operation.

Moreover, EP -A-1113231 discloses an air conditioning in which zone controllers open and close respective valves based on a zone demand which is a function of the difference between the set point temperature and the temperature sensed by sensors in the respective zone.

Accordingly, an object of the present invention is to provide a radiator that can reduce the risk that the heat exchanger will break.

### <Solution to Problem>

A radiator according to a first aspect of the present invention is a radiator having the features of claim 1. In the radiator according to the first aspect of the invention, the passageway modifying mechanism is set to the first state or the second state based on the determination result of the determination unit. Consequently, if, for example, a temperature range within which the heat exchanger will not break is set as the prescribed temperature range and if the operation unit sets the passageway modifying mechanism to the second state when the determination unit determines that the water temperature is not within the prescribed temperature range, then it is possible to reduce the risk that cold water or hot water that will break the heat exchanger will flow to the heat exchanger.

Thereby, it is possible to reduce the risk that the heat exchanger will break.

Furthermore, the second state includes the state wherein no water whatsoever flows from the heat source unit side to the heat exchanger side and the state wherein a small amount of the water flows from the heat source side to the heat exchanger side.

The radiator according to a second aspect of the present invention is the radiator according to the first aspect of the present invention and further comprises a second piping and a bypass piping. In the second piping, the water flows from the heat exchanger side to the heat source unit side. The bypass piping diverts the water from the first piping to the second piping without passing the water through the heat exchanger. In addition, if the passageway modifying mechanism assumes the second state, then the water flows from the first piping to the second piping via the bypass piping. Consequently, if, for example, a temperature range within which the heat exchanger will not break is set as the prescribed temperature range, then cold water or hot water that will break the heat exchanger can flow to the heat source unit side without flowing through the heat exchanger.

Thereby, it is possible to reduce the risk that the heat exchanger will break.

The radiator according to a third aspect of the present invention is the radiator according to the second aspect of the present invention, wherein the passageway modifying mechanism is a three-way valve. Consequently, switching the state of the three-way valve makes it possible for the water flowing through the first piping to flow to the heat exchanger, to flow to the second piping via the bypass piping, and the like.

The radiator according to a fourth aspect of the present invention is the radiator according to the fourth aspect of the present invention and further comprises an indoor temperature detection unit that is capable of detecting an indoor temperature, which is the temperature of an indoor space subject to the cooling and/or the heating. In addition, the determination unit calculates a second temperature range based on a detection result of the indoor temperature detection unit. Furthermore, the determination unit determines whether a second condition is met. The second condition is a condition wherein the water temperature detected by the water temperature detection unit is within the second temperature range. If the determination unit determines that the first condition and the second condition are met, then the operation unit sets the passageway modifying mechanism to the first state. Consequently, if the first condition or the second condition, or both, is not met, then the passageway modifying mechanism can be set to the second state.

Thereby, it is possible to reduce the risk that water of a temperature not within the prescribed temperature range will flow into the heat exchanger.

### <Advantageous Effects of Invention>

In the radiator according to the first aspect of the present invention, it is possible to reduce the risk that the heat exchanger will break.

In the radiator according to the second aspect of the present invention, it is possible to reduce the risk that the heat exchanger will break.

In the radiator according to the third aspect of the present invention, switching the state of the three-way valve makes it possible for the water flowing through the first piping to flow to the heat exchanger, to flow to the second piping via the bypass piping, and the like.

In the radiator according to the fourth aspect of the present invention, it is possible to reduce the risk that water of a temperature not within the prescribed temperature range will flow into the heat exchanger.

### BRIEF DESCRIPTION OF THE DRAWINGS

**FIG. 1** is a schematic drawing of an air conditioning system that comprises radiators according to an embodiment of the present invention.
**FIG. 2** is an external oblique view of one of the radiators according to the embodiment of the present invention.
**FIG. 3** is a control block diagram of a control unit provided by the radiator.
**FIG. 4** is a drawing that shows the relationship between the state of a three-way valve and a first temperature range.
**FIG. 5** is a flow chart that depicts a control operation of a water temperature determination unit.

### DESCRIPTION OF EMBODIMENTS

The text below explains an air conditioning system **1** that comprises radiators **50**, **50** according to an embodiment of the present invention.

### <Configuration of the Air Conditioning System>

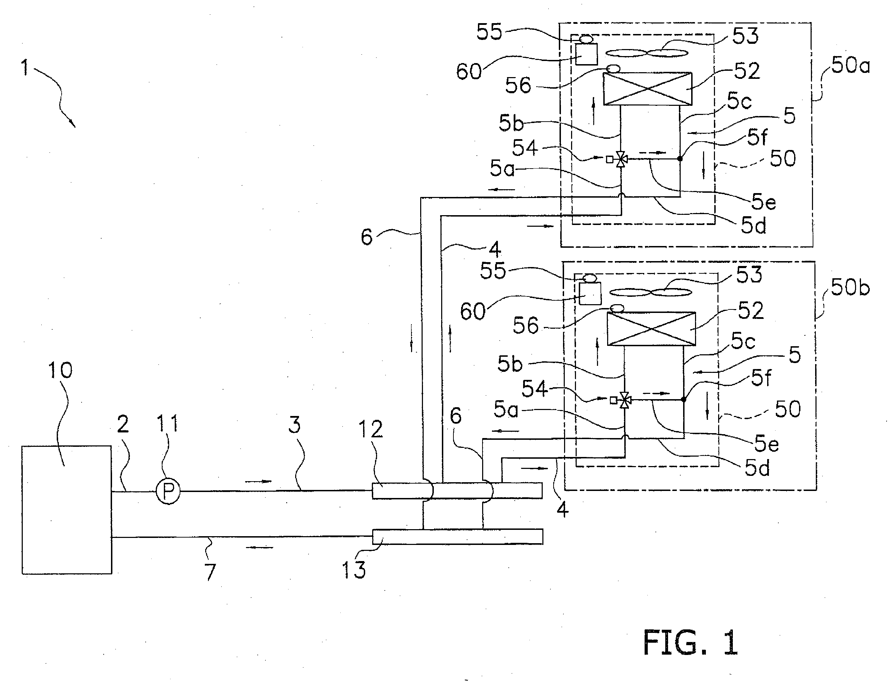

As shown in **FIG 1**, the air conditioning system **1** comprises a heat source unit **10**, a circulation pump **11**, a first header **12,** a second header **13**, and a plurality of (in the present embodiment, two) radiators **50**, **50**. In addition, a water circulation circuit is configured by connecting the heat source unit **10**, the circulation pump **11**, the first header **12**, the second header **13**, and the radiators **50**, **50** with pipings.

The heat source unit **10** produces cold water or hot water by exchanging heat between water and a refrigerant or the like. Furthermore, in the present embodiment, a setting unit (not shown) provided by the heat source unit **10** sets the temperature of the cold water or the hot water produced in the heat source unit **10**. Consequently, the heat source unit **10** exchanges heat between the refrigerant and the water such that the temperature of the water approaches a set temperature. The circulation pump **11** circulates the water inside the water circulation circuit. One of the radiators **50**, **50** is installed in and air conditions each of two indoor spaces **50a**, **50b**. In addition, the two radiators **50**, **50** are connected to one another in parallel via the first header **12** and the second header **13**. Furthermore, the configuration of the radiators **50**, **50** is explained in detail later.

The water circulation circuit comprises a first inflow side piping **2**, a second inflow side piping **3**, third inflow side pipings **4**, radiator pipings **5**, first outflow side pipings **6**, and a second outflow side piping **7**. The first inflow side piping **2** connects the heat source unit **10** and the circulation pump **11**. In addition, the second inflow side piping **3** connects the circulation pump **11** and the first header **12**. The third inflow side pipings **4** connect the first header **12** to the radiators **50**, **50**. The radiator pipings **5** are disposed inside the radiators **50**, **50.** Furthermore, the radiator pipings **5** are explained later. The first outflow side pipings **6** connect the radiators **50**, **50** to the second header **13**. The second outflow side piping **7** connects the second header **13** and the heat source unit **10**. Based on such a configuration, in the water circulation circuit, the cold water or the hot water produced in the heat source unit **10** flows by the operation of the circulation pump **11** to the radiators **50**, **50** via the first header **12**, and the water that flows from the radiators **50**, **50** returns to the heat source unit **10** via the second header **13**.

### <Radiators>

The radiators **50**, **50** are compact indoor units that can be installed on a floor; furthermore, the radiators **50**, **50** can cool and heat the indoor spaces **50a**, **50b** by sucking in the cold and hot water, respectively, produced in the heat source unit **10.** Furthermore, the radiator **50** installed in the indoor space **50a** and the radiator **50** installed in the indoor space **50b** have the same configuration. In addition, although the radiators **50** of the present embodiment are compact indoor units that can be installed on a floor, the indoor unit is not limited thereto; for example, each of the radiators may be a wall mounted indoor unit or a ceiling cassette type indoor unit.

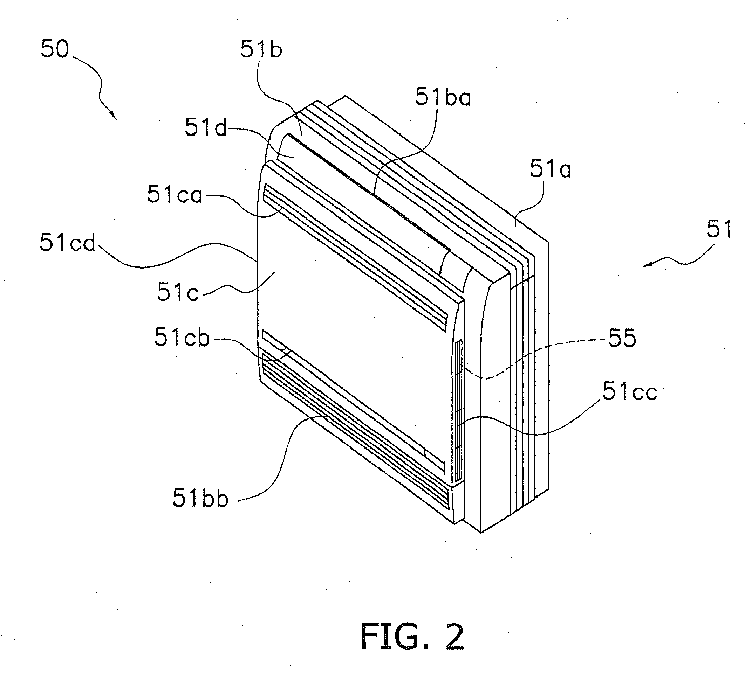

As shown in **FIG 1** and **FIG 2**, each of the radiators **50** comprises a casing **51**, a heat exchanger **52**, a fan **53**, a three-way valve **54**, an indoor temperature detection unit **55**, and a heat exchanger temperature detection unit **56**. Furthermore, in the present embodiment, each of the radiators **50** comprises the heat exchanger **52** and the fan **53** but the present invention is not limited thereto; for example, each of the radiators must comprise a heat exchanger, but does not have to comprise a fan.

Each of the casings **51** houses the heat exchanger **52**, the fan **53**, the indoor temperature detection unit **55**, the heat exchanger temperature detection unit **56**, the three-way valve **54**, and the radiator piping **5**. Each of the radiator pipings **5** comprises a first piping **5a**, a second piping **5b**, a third piping **5c**, a fourth piping **5d**, and a bypass piping **5e**. One end part of the first piping **5a** is connected to the third inflow side piping **4** via a connection port (not shown), and another end part of the first piping **5a** is connected to the three-way valve **54**. In addition, one end part of the second piping **5b** is connected to the three-way valve **54**, and another end part of the second piping **5b** is connected to the heat exchanger **52**. One end part of the third piping **5c** is connected to the heat exchanger **52**, and another end part of the third piping **5c** is connected to the fourth piping **5d**. One end part of the fourth piping **5d** is connected to the third piping **5c**, and another end part of the fourth piping **5d** is connected to the first outflow side piping **6** via a connection port (not shown). One end part of the bypass piping **5e** is connected to the three-way valve **54**, and another end part of the bypass piping **5e** is connected to a connecting part **5f** between the third piping **5c** and the fourth piping **5d**.

In addition, as shown in **FIG. 2**, each of the casings **51** comprises a bottom frame **51a**, a front surface grill **51b** and a front surface panel **51c**. The bottom frame **51a** is substantially oblong. The front surface grill **51b** is attached to the front side of the bottom frame **51a**. In addition, an opening (not shown) is formed in the front surface of the front surface grill **51b**. The front surface panel **51c** is attached to the front side of the front surface grill **51b** such that it covers the opening formed in the front surface grill **51b.**

In addition, a first blow out port **51ba** is formed in an upper part of the front surface grill **51b**. A second blow out port **51bb** is formed in a lower part of the front surface grill **51b.** In addition, a flap **51d** is disposed in the vicinity of and is capable of covering the first blow out port **51ba**.

In addition, a first suction port **51ca** is formed in an upper part of the front surface panel **51c**. A second suction port **51cb** is formed in a lower part of the front surface panel **51c**. Third suction ports **51cc**, **51cd** are respectively formed in the left and right side surfaces of the front surface panel **51c**.

Each of the heat exchangers **52** comprises a heat transfer pipe, which is folded multiple times at both ends in the longitudinal directions, and a plurality of fins, wherethrough the heat transfer pipe is inserted. In addition, one end part of the heat transfer pipe is connected to the second piping **5b**, and another end part of the heat transfer pipe is connected to the third piping **5c.** Consequently, in each of the heat exchangers **52**, by the circulation pump **11** feeding cold water or hot water from the heat source unit **10**, heat is exchanged between the indoor air and the cold water or hot water flowing inside the heat transfer pipe.

Each of the fans **53** is a turbofan that sucks air in from its front side (i.e., its front surface side) and blows the air out in the centrifugal directions. The fan **53** is disposed on the rear side (i.e., rear surface side) of a bell mouth (not shown); furthermore, the fan **53** sucks air in from the first suction port **51ca**, the second suction port **51cb**, and the third suction port **51cc**, **51cd**, passes that air through the heat exchanger **52** and the bell mouth, and generates a flow of air that is blown out from the first blow out port **51ba** and the second blow out port **51bb**.

Each of the three-way valves **54** can assume a first state, wherein the first piping **5a** and the second piping **5b** are connected, and a second state, wherein the first piping **5a** and the bypass piping **5e** are connected. Consequently, when the three-way valve **54** assumes the first state, a flow of water from the first piping **5a** to the second piping **5b** is permitted. Accordingly, when the three-way valve **54** assumes the first state, a flow of water from the heat source unit **10** to the heat exchanger **52** is permitted. In addition, when the three-way valve **54** assumes the first state, a flow of water from the first piping **5a** to the bypass piping **5e** (i.e., a flow of water in the direction of the broken line arrow in **FIG. 1**) is completely blocked. Consequently, if the three-way valve **54** assumes the first state, then the water that flows through the third inflow side piping **4** flows into the heat exchanger **52** via the first piping **5a** and the second piping **5b**. Furthermore, the water that flows into the heat exchanger **52** flows to the first outflow side piping **6** via the third piping **5c** and fourth piping **5d.** In addition, if the three-way valve **54** assumes the second state, then the flow of water from the heat source unit **10** to the heat exchanger **52** is completely blocked. Consequently, if the three-way valve **54** assumes the second state, then the flow of water from the first piping **5a** to the second piping **5b** is completely blocked, and the flow of water from the first piping **5a** to the bypass piping **5e** (i.e., the flow of water in the direction of the broken line arrow in **FIG. 1**) is permitted. Accordingly, if the three-way valve **54** assumes the second state, then the water that flows through the third inflow side piping **4** flows from the first piping **5a** to the fourth piping **5d** via the bypass piping **5e** and subsequently flows to the first outflow side piping **6.** Thereby, if the three-way valve **54** assumes the second state, then the water that flows from the heat source unit **10** flows back to the heat source unit **10** without flowing into the heat exchanger **52.**

The indoor temperature detection units **55** detect the temperature of the indoor spaces **50a**, **50b**, wherein the radiators **50** are installed. In addition, each of the indoor temperature detection units **55** is disposed inside the corresponding casing **51** in the vicinity of the third suction port **51cc**. Furthermore, information about the indoor temperature detected by the indoor temperature detection unit **55** is transmitted to a control unit **60** (discussed below) as needed.

Each of the heat exchanger temperature detection units **56** detects the temperature of the corresponding heat exchanger **52**. In addition, the heat exchanger temperature detection unit **56** is disposed in the vicinity of the corresponding heat exchanger **52**. Furthermore, information about the temperature of the heat exchanger **52** detected by the heat exchanger temperature detection unit **56** is transmitted the control unit **60** (discussed below) as needed.

In addition, each of the radiators **50** comprises one of the control units **60**, which controls the corresponding three-way valve **54**. The control units **60** are explained below.

### <Control Units>

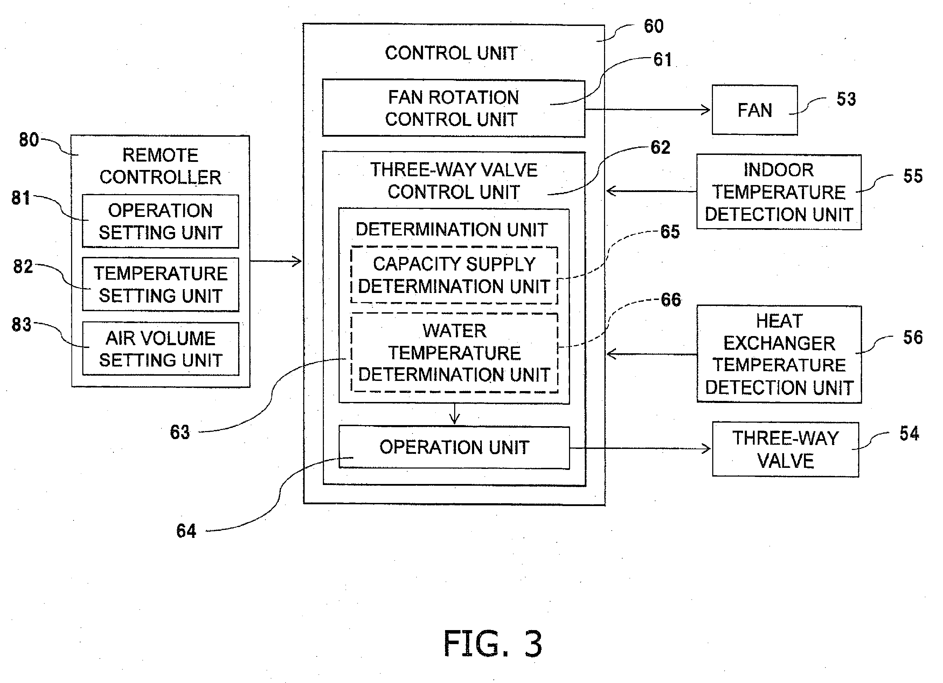

As shown in **FIG. 3**, each of the control units **60** is connected to the three-way valve **54** and the fan **53** of the corresponding radiator **50**; furthermore, the control units **60** control the three-way valves **54** and the fans **53** such that the indoor spaces **50a**, **50b** are cooled or heated. In addition, as shown in **FIG 1**, each of the radiators **50** comprises one of the control units **60.**

Each of the control units **60** is capable of receiving various instructions transmitted from a user via a wireless remote controller **80.** Furthermore, the various instructions include operation setting instructions, a set temperature instruction, and an air volume setting instruction. In addition, the operation setting instructions include a cooling setting instruction to cool the indoor spaces **50a**, **50b** and a heating setting instruction to heat the indoor spaces **50a**, **50b**. In addition, each of the remote controllers **80** comprises: an operation setting unit **81**, which transmits the operation setting instructions to the corresponding control unit **60**; a temperature setting unit **82,** which transmits the set temperature instruction to the corresponding control unit **60;** and an air volume setting unit **83**, which transmits the air volume setting instruction to the corresponding control unit **60**. By operating the operation setting unit **81**, the temperature setting unit **82**, and the air volume setting unit **83**, the user can transmit the various instructions to the corresponding control unit **60**.

In addition, each of the control units **60** comprises: a three-way valve control unit **62**, which controls the operation of the three-way valve **54**; and a fan rotation control unit **61**, which controls the rotation of the fan **53**.

The three-way valve control unit **62** comprises a determination unit **63** and an operation unit **64**. In addition, the determination unit **63** comprises a capacity supply determination unit **65** and a water temperature determination unit **66**.

The capacity supply determination unit **65** determines whether there is a need to supply capacity to the corresponding heat exchanger **52**. Specifically, the capacity supply determination unit **65** determines whether there is a need to flow cold water or hot water to the heat exchanger **52** by comparing a set temperature, which is obtained from set temperature information based on a set temperature instruction transmitted from the corresponding remote controller **80**, and an indoor temperature, which is obtained from the indoor temperature information transmitted from the corresponding indoor temperature detection unit **55**. More specifically, if the set temperature and the indoor temperature differ by a first prescribed temperature (e.g., 1°C) or greater, then it is determined that there is a need to supply capacity. In addition, if the difference between the set temperature and the indoor temperature is less than the first prescribed temperature, then the capacity supply determination unit **65** determines that there is no need to supply capacity. Furthermore, if the capacity supply determination unit **65** determines that there is a need to supply capacity, then the capacity supply determination unit **65** transmits capacity supply needed information (hereinbelow, called demand present information) to the operation unit **64**. In addition, if the capacity supply determination unit **65** determines that there is no need to supply capacity, then the capacity supply determination unit **65** transmits capacity supply unneeded information (hereinbelow, called demand absent information) to the operation unit **64**.

If the capacity supply determination unit **65** determines that there is a need to supply capacity, then the water temperature determination unit **66** performs a water temperature determination, wherein the water temperature determination unit **66** determines whether the temperature of the water flowing through the corresponding heat exchanger **52** is within a prescribed temperature range. Specifically, in the water temperature determination, the water temperature determination unit **66** determines whether a first condition and a second condition are met. In addition, if the water temperature determination unit **66** determines that both the first condition or the second condition are met, then the water temperature determination unit **66** determines that the temperature of the water flowing through the corresponding heat exchanger **52** is within the prescribed temperature range and that it is possible to supply water to the heat exchanger **52.** In addition, if the water temperature determination unit **66** determines that either the first condition or the second condition, or both, is not met, then the water temperature determination unit **66** determines that the temperature of the water flowing through the corresponding heat exchanger **52** is not within the prescribed temperature range and that it is not possible to supply water to the heat exchanger **52**.

In addition, if the water temperature determination unit **66** determines that the temperature of the water flowing through the heat exchanger **52** is within the prescribed temperature range, namely, that it is possible to supply water to the heat exchanger **52**, then the water temperature determination unit **66** transmits supply possible information to the operation unit **64**. In addition, if the water temperature determination unit **66** determines that the temperature of the water flowing through the heat exchanger **52** is not within the prescribed temperature range, namely, that it is not possible to supply water to the heat exchanger **52**, then the water temperature determination unit **66** transmits supply not possible information to the operation unit **64**.

Furthermore, the first condition is that the temperature of the water flowing through the heat exchanger **52** is within a preset first temperature range. Furthermore, in the present embodiment, the temperature of the water flowing into the heat exchanger **52** is estimated based on the heat exchanger temperature obtained from the temperature information of the heat exchanger **52** transmitted from the heat exchanger temperature detection unit **56**. In addition, the first temperature range is a temperature region that extends from a lower limit temperature (e.g., 4°C) to an upper limit temperature (e.g., 65°C). Furthermore, in the present embodiment, the upper limit temperature and the lower limit temperature of the first temperature range are preset by a designer, but the present invention is not limited thereto; for example, they may be set by an installation worker or a user. In addition, the first temperature range may be set to any temperature region as long as the temperature region does not lie outside of the working range of the heat exchanger **52** (e.g., a low temperature wherein the water freezes or a high temperature wherein the water affects the heat resistance of the heat exchanger **52**).

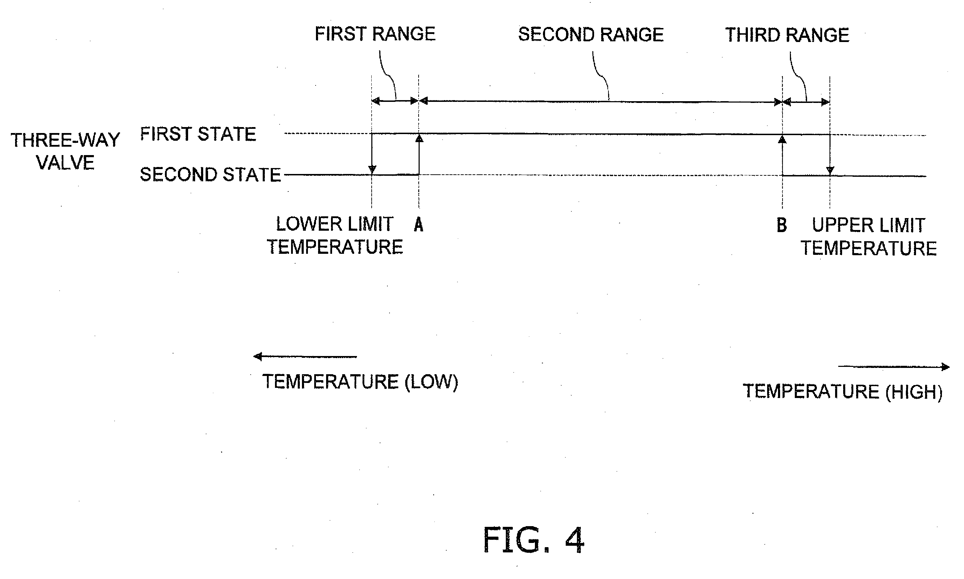

In addition, as shown in **FIG. 4**, the first temperature range includes a first range, a second range, and a third range. The first range is a temperature region that extends from a first prescribed temperature *A*, which is higher than the lower limit temperature by a prescribed temperature (e.g., 0.5°C), to the lower limit temperature. In addition, the third range is a temperature region that extends from a second prescribed temperature *B*, which is lower than the upper limit temperature by a prescribed temperature (e.g., 1°C), to the upper limit temperature. Furthermore, the second range is a temperature region that extends from the first prescribed temperature *A* to the second prescribed temperature *B*.

If the water temperature determination unit **66** determines that the heat exchanger temperature is within the second range, then the water temperature determination unit **66** determines that the heat exchanger temperature is within the first temperature range. In addition, if the water temperature determination unit **66** determines that the heat exchanger temperature is within the first range or within the third range, then, in accordance with the state of the corresponding three-way valve **54**, the water temperature determination unit **66** determines whether the heat exchanger temperature is within the first temperature range. For example, if the water temperature determination unit **66** determines that the heat exchanger temperature is within the first range and if the supply possible information was transmitted to the operation unit **64** in the previous water temperature determination, then the water temperature determination unit **66** determines that the heat exchanger temperature is within the first temperature range. In addition, if the water temperature determination unit **66** determines that the heat exchanger temperature is within the first range and if the supply not possible information was transmitted to the operation unit **64** in the previous water temperature determination, then the water temperature determination unit **66** determines that the heat exchanger temperature is not within the first temperature range. Furthermore, if the water temperature determination unit **66** determines that the heat exchanger temperature is within the third range and if the supply possible information was transmitted to the operation unit **64** in the previous water temperature determination, then the water temperature determination unit **66** determines that the heat exchanger temperature is within the first temperature range. In addition, if the water temperature determination unit **66** determines that the heat exchanger temperature is within the second range and if the supply not possible information was transmitted to the operation unit **64** in the previous water temperature determination, then the water temperature determination unit **66** determines that the heat exchanger temperature is not within the first temperature range. Thus, imparting so-called hysteresis characteristics to the operation of switching the state of the three-way valve **54** prevents the phenomenon of hunting, wherein the state of the three-way valve **54** is switched in micro steps when the heat exchanger temperature is in the vicinity of either the upper limit temperature or the lower limit temperature.

In addition, the second condition is that the temperature of the water flowing into the heat exchanger **52** is within a second temperature range. Furthermore, as in the first condition, the temperature of the water flowing into the heat exchanger **52** is estimated based on the heat exchanger temperature obtained from the temperature information of the heat exchanger **52** transmitted from the corresponding heat exchanger temperature detection unit **56**. In addition, the second temperature range is calculated based on the current operation setting and the current indoor temperature. Furthermore, the current indoor temperature is the indoor temperature obtained from the indoor temperature information transmitted from the indoor temperature detection unit **55**. For example, if the current operation setting is a cooling setting, then the second temperature range is a temperature region that is less than or equal to the sum of the indoor temperature and a prescribed temperature (i.e., ≤ indoor temperature + prescribed temperature), for example, 3°C. In addition, if the current operation setting is a heating setting, then the second temperature range is a temperature region that is greater than or equal to the indoor temperature minus a prescribed temperature (i.e., ≥ indoor temperature - prescribed temperature), for example, 3°C.

The operation unit **64** sets the state of the three-way valve **54** by transmitting an energize signal or a de-energize signal to the three-way valve **54**. Specifically, the operation unit **64** sets the three-way valve **54** to the first state by transmitting the energize signal to the three-way valve **54.** In addition, the operation unit **64** sets the three-way valve **54** to the second state by transmitting the de-energize signal to the three-way valve **54**.

In addition, if the demand present information is transmitted from the capacity supply determination unit **65**, then the operation unit **64** transmits the energize signal to the three-way valve **54**. In addition, if the demand absent information is transmitted from the capacity supply determination unit **65**, then the operation unit **64** transmits the de-energize signal to the three-way valve **54**. Furthermore, if the supply possible information is transmitted from the water temperature determination unit **66** after the demand present information has been transmitted from the capacity supply determination unit **65**, then the operation unit **64** transmits the energize signal to the three-way valve **54**. In addition, if the supply not possible information is transmitted from the water temperature determination unit **66** after the demand present information has been transmitted from the capacity supply determination unit **65**, then the operation unit **64** transmits the de-energize signal to the three-way valve **54**. Furthermore, if the supply not possible information is transmitted from the water temperature determination unit **66**, then the operation unit **64** ignores the demand present information transmitted from the capacity supply determination unit **65** until a first prescribed time has elapsed since the supply not possible information was transmitted. Consequently, if the supply not possible information is transmitted from the water temperature determination unit **66**, then the operation unit **64** does not transmit the energize signal to the three-way valve **54** until the first prescribed time has elapsed since the supply not possible information was transmitted. Thereby, if the capacity supply determination unit **65** determines that there is a need to supply capacity and if the water temperature determination unit **66** determines that the temperature of the water flowing through the heat exchanger **52** is within the prescribed temperature range, then the three-way valve **54** transitions to the first state. In addition, if the capacity supply determination unit **65** determines that there is no need to supply capacity or if the capacity supply determination unit **65** determines that there is a need to supply capacity but the water temperature determination unit **66** determines that the temperature of the water flowing through the heat exchanger **52** is not within the prescribed temperature range, then the three-way valve **54** transitions to the second state.

In addition, the fan rotation control unit **61** determines the rotational speed of the corresponding fan **53** by comparing air volume information, which is based on an air volume setting instruction transmitted from the remote controller **80**, and heat exchanger temperature information, which is transmitted from the heat exchanger temperature detection unit **56**. Furthermore, the fan rotation control unit **61** transmits a control signal to the fan **53** so that the fan **53** rotates at the determined rotational speed. Furthermore, in the present embodiment, the three-way valve **54** and the fan **53** are controlled independently.

### <Three-way Valve Control Operation>

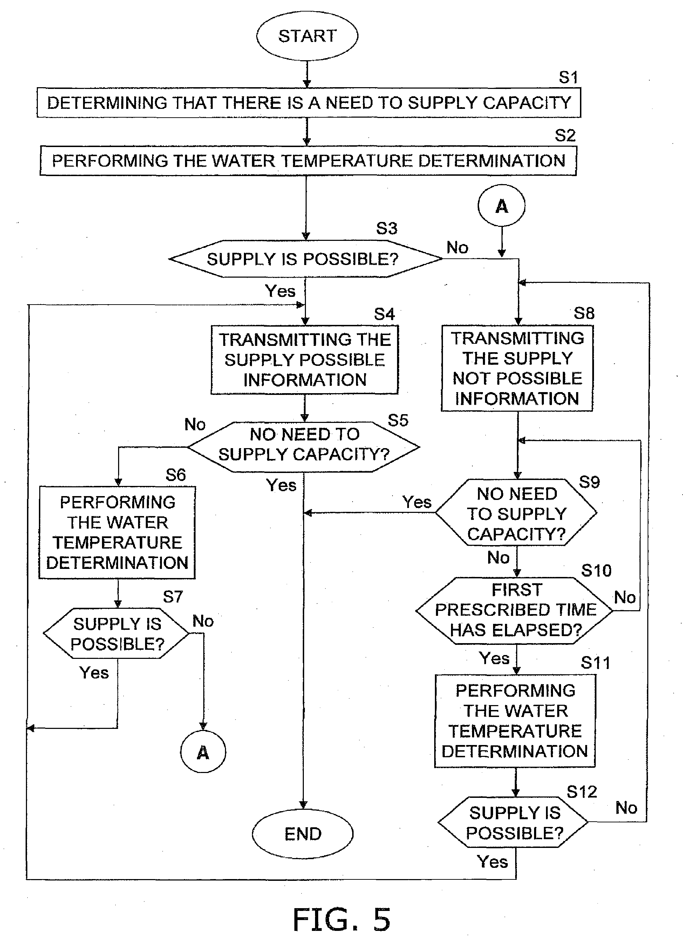

Next, an operation of controlling the three-way valve **54** via the three-way valve control unit **62** will be explained, referencing **FIG. 5**. Furthermore, **FIG. 5** is a flow chart that depicts the flow of the water temperature determination, which is performed by the water temperature determination unit **66**. Furthermore, the explanation herein addresses the case wherein the three-way valve **54** is in the second state and the flow of water from the first piping **5a** to the second piping **5b** is blocked.

If the capacity supply determination unit **65** determines that there is a need to supply capacity, then it transmits demand present information to the operation unit **64** so that water flows into the heat exchanger **52** (i.e., in a step **S1**). By the transmission of the demand present information from the capacity supply determination unit **65**, the operation unit **64** transmits the energize signal to the three-way valve **54** so that the three-way valve **54** switches to the first state. Thereby, the three-way valve **54** switches from the second state to the first state and water flows into the heat exchanger **52**.

In addition, the water temperature determination unit **66** performs the water temperature determination after a second prescribed time has elapsed since the three-way valve **54** switched from the second state to the first state (e.g., after the time it takes for the difference between the temperature of the heat exchanger and the temperature of the cold water or the hot water flowing through the second piping **5b** to become small) (i.e., in a step **S2**)**.** Furthermore, if the water temperature determination unit **66** determines that supply is possible, then it transmits the supply possible information to the operation unit **64** (i.e., in a step **S3** and a step **S4**). If the supply possible information is transmitted from the water temperature determination unit **66**, then the operation unit **64** transmits the energize signal to the three-way valve **54** so that the three-way valve **54** maintains the first state as is. Thereby, the three-way valve **54** maintains the first state without switching to the second state. Subsequently, if the capacity supply determination unit **65** determines that there is no need to supply capacity, then it transmits the demand absent information to the operation unit **64** (i.e., in a step **S5**). If the demand absent information is transmitted from the capacity supply determination unit **65**, then the operation unit **64** transmits the de-energize signal to the three-way valve **54** so that the three-way valve **54** switches from the first state to the second state. Thereby, the three-way valve **54** switches from the first state to the second state.

In addition, if the water temperature determination unit **66** transmits the supply possible information to the operation unit **64** and the capacity supply determination unit **65** does not subsequently determine that there is no need to supply capacity, namely, if the demand absent information is not transmitted from the capacity supply determination unit **65** to the operation unit **64**, then the water temperature determination unit **66** once again performs the water temperature determination (i.e., in a step **S6**). Furthermore, if the water temperature determination unit **66** determines once again in the water temperature determination of the step **S6** that supply is possible (i.e., in a step **S7**), then the method returns to the step **S4** and the water temperature determination unit **66** transmits the supply possible information to the operation unit **64**. If the supply possible information is transmitted from the water temperature determination unit **66**, then the operation unit **64** transmits the energize signal to the three-way valve **54** so that the three-way valve **54** maintains the first state as is. Thereby, the three-way valve **54** maintains the first state without switching to the second state. In addition, if the water temperature determination unit **66** determines in the water temperature determination (i.e., in the step **S6**) performed after the supply possible information has been transmitted to the operation unit **64** that supply is not possible, then the water temperature determination unit **66** transmits the supply not possible information to the operation unit **64** so that the water does not flow into the heat exchanger **52** (i.e., in a step **S8**). Furthermore, the water temperature determination of the step **S6** is performed repetitively until either the capacity supply determination unit **65** determines that there is no need to supply capacity or it is determined that supply is not possible in the water temperature determination of the step **S6** (i.e., in the step **S5** and the step **S7**).

In addition, if it is determined in the step **S3** that supply is not possible, then the water temperature determination unit **66** transmits the supply not possible information to the operation unit **64** so that the water does not flow into the heat exchanger **52** (i.e., in the step **S8**). If the supply not possible information is transmitted from the water temperature determination unit **66**, then the operation unit **64** transmits the de-energize signal to the three-way valve **54** so that the three-way valve **54** switches to the second state. Thereby, the three-way valve **54** switches from the first state to the second state.

Furthermore, until the first prescribed time since the transmission of the supply not possible information from the water temperature determination unit **66** has elapsed, the operation unit **64** ignores the demand present information transmitted from the capacity supply determination unit **65.** Consequently, until the first prescribed time since the transmission of the supply not possible information from the water temperature determination unit **66** has elapsed, the operation unit **64** does not transmit the energize signal to the three-way valve **54**. Consequently, even if the capacity supply determination unit **65** determines that there is a need to supply capacity, the three-way valve **54** maintains the second state, to which it has switched. In addition, if the demand absent information is transmitted from the capacity supply determination unit **65** before the first prescribed time since the transmission of the supply not possible information from the water temperature determination unit **66** has elapsed, then the operation unit **64** transmits the de-energize signal to the three-way valve **54** (i.e., in a step **S9**). In this case, too, the three-way valve **54** maintains the second state, to which it has switched.

Furthermore, if the demand absent information is not transmitted from the capacity supply determination unit **65** by the time the first prescribed time since the transmission of the supply not possible information from the water temperature determination unit **66** has elapsed, namely, if the demand present information is transmitted from the capacity supply determination unit **65** after the first prescribed time since the transmission of the supply not possible information from the water temperature determination unit **66** has elapsed, then the operation unit **64** transmits the energize signal to the three-way valve **54** (i.e., in a step **S10**). Thereby, the three-way valve **54** switches from the second state to the first state. Furthermore, after the second prescribed time since the three-way valve **54** switched from the second state to the first state has elapsed, the water temperature determination unit **66** once again performs the water temperature determination (i.e., in a step **S11**). Furthermore, if the water temperature determination unit **66** determines that supply is possible in the water temperature determination of the step **S11**, then the method returns to the step **S4** and the water temperature determination unit **66** transmits the supply possible information to the operation unit **64** (i.e., in a step **S12**). If the supply possible information is transmitted from the water temperature determination unit **66**, then the operation unit **64** transmits the energize signal to the three-way valve **54** so that the three-way valve **54** maintains the first state. Thereby, the three-way valve **54** maintains the first state without switching to the second state.

In addition, if the water temperature determination unit **66** determines in the water temperature determination of the step **S11** that supply is not possible, then the method returns to the step **S8** and the water temperature determination unit **66** transmits the supply not possible information to the operation unit **64** (i.e., the step **S12**). If the supply not possible information is transmitted from the water temperature determination unit **66,** then the operation unit **64** transmits the de-energize signal to the three-way valve **54** so that the three-way valve **54** switches from the first state to the second state. Thereby, the three-way valve **54** switches from the first state to the second state.

Thus, the water temperature determination unit **66** repetitively performs the water temperature determination of the step **S6** or the step **S11** every time the prescribed time elapses until the capacity supply determination unit **65** determines that there is no need to supply capacity. Furthermore, if the water temperature determination unit **66** determines, continuously for a prescribed count or greater, in the water temperature determination of the step **S11** that supply is not possible, then a water temperature error may be reported to the user.

### <Features>

### (1)

In the abovementioned embodiment, the operation unit **64** switches the three-way valve **54** in either of the state selected from the first state and the second state based on the determination result of the water temperature determination unit **66**. Specifically, if the supply possible information is transmitted from the water temperature determination unit **66**, then the operation unit **64** transmits the energize signal to the three-way valve **54**. Thereby, the three-way valve **54** assumes the first state. In addition, if the supply not possible information is transmitted from the water temperature determination unit **66**, then the operation unit **64** transmits the de-energize signal to the three-way valve **54**. Thereby, the three-way valve **54** assumes the second state. Accordingly, if the water temperature determination unit **66** determines that the temperature of the water flowing through the heat exchanger **52** is not within the prescribed temperature range, then the three-way valve **54** assumes the second state, which makes it possible to reduce the risk that water of a temperature not within the prescribed temperature range will flow into the heat exchanger **52**.

Thereby, it is possible to reduce the risk that the heat exchanger **52** will break.

### (2)

In the abovementioned embodiment, if the three-way valve **54** assumes the second state, then the flow of water from the first piping **5a** to the second piping **5b** is blocked and the flow of the water from the first piping **5a** to the bypass piping **5e** is permitted. Consequently, if the three-way valve **54** assumes the second state, then the water flowing through the first piping **5a** can be diverted to the fourth piping **5d**. Accordingly, it is possible to reduce the risk that water of a temperature not within the prescribed temperature range will flow into the heat exchanger **52**. In addition, water of a temperature not within the prescribed temperature range can be returned to the heat source unit **10** without passing through the heat exchanger **52**.

Thereby, it is possible to reduce the risk that the heat exchanger **52** will break.

### (3)

In the abovementioned embodiment, if the first condition and the second condition are met, then the water temperature determination unit **66** determines that it is possible to supply water to the heat exchanger **52**. The first condition is that the temperature of the water that flows into the heat exchanger **52** is within the first temperature range, which is preset as the temperature region that lies outside of the working range of the heat exchanger **52**. Consequently, if the first condition is met, then water of a temperature that would cause the heat exchanger **52** to break cannot continue to flow through the heat exchanger **52**. Accordingly, it is possible to reduce the risk that the heat exchanger **52** will break. In addition, the second condition is that the temperature of the water flowing through the heat exchanger **52** lies within the second temperature range, which is calculated based on the current operation setting and the current indoor temperature. Consequently, if the second condition is met, then it is possible to ensure that, for example, water of a temperature higher than the indoor temperature does not continue to flow through the heat exchanger **52** during cooling, water of a temperature lower than the indoor temperature does not continue to flow through the heat exchanger **52** during heating, and the like. Accordingly, it is possible to reduce the risk of, for example, the indoor temperature rising during cooling, the indoor temperature falling during heating, and the like.

Thereby, even without the user operating the remote controller **80** and the like, it is possible to reduce the risk that the heat exchanger **52** will break and to improve the comfort of the user.

### <Modified Examples>

### (A)

In the abovementioned embodiment, the three-way valve **54** is adopted in order to permit the flow of the water from the heat source unit **10** to the heat exchanger **52**, to block the flow of the water from the heat source unit **10** to the heat exchanger **52**, and the like.

Instead, a solenoid valve (i.e., a two-way valve) configured such that it is capable of only opening and closing may be provided to the second piping and to the bypass piping. In addition, instead of a solenoid valve, a motor operated valve configured such that it is capable of flow volume adjustment may be provided.

### (B)

In the abovementioned embodiment, the temperature of the water flowing into the heat exchanger **52** is estimated based on the heat exchanger temperature transmitted from the heat exchanger temperature detection unit **56**.

Instead, a detection unit for detecting the temperature of the water flowing into the heat exchanger may be disposed in the vicinity of the first piping. If the detection unit for detecting the temperature of the water flowing into the heat exchanger is disposed in the vicinity of the first piping, then the temperature of the water flowing to the heat exchanger can be detected continuously. Consequently, the water temperature determination can be performed without switching the three-way valve from the second state to the first state each time the prescribed time elapses.

### INDUSTRIAL APPLICABILITY

The present invention can reduce the risk that the heat exchanger will break, and consequently it is effective to adapt the present invention to a radiator that cools and/or heats by sucking cold water or hot water from a heat source unit to a heat exchanger.

### REFERENCE SIGNS LIST

- **5a**: First piping
- **5d**: Fourth piping (second piping)
- **5a**: Bypass piping
- **10**: Heat source unit
- **50**: Radiator
- **52**: Heat exchanger
- **54**: Three-way valve (passageway modifying mechanism)
- **55**: Indoor temperature detection unit
- **56**: Heat exchanger temperature detection unit (water temperature detection unit)
- **60**: Control unit
- **64**: Operation unit
- **66**: Water temperature determination unit (determination unit)

### CITATION LIST

### PATENT LITERATURE

### Patent Document 1

Japanese Unexamined Patent Application Publication No. 2002-98344

## Claims

1. A radiator (**50**) that cools and/or heats by sucking cold water or hot water from a heat source unit (**10**), comprising:
a heat exchanger (**52**);
a first piping (**5a**), wherethrough water flows from the heat source unit side to the heat exchanger side;
a passageway modifying mechanism (**54**) that assumes a first state, wherein a flow of the water from the heat source unit side to the heat exchanger side is permitted, and a second state, wherein the flow of the water from the heat source unit side to the heat exchanger side is blocked;
a water temperature detection unit (**56**) that is capable of detecting a water temperature, which is the temperature of the water flowing to the heat exchanger; and
a control unit (**60**) that comprises:
a determination unit **(66)**, configured to determine whether the water temperature detected by the water temperature detection unit is within a prescribed temperature range; and
an operation unit **(64)**, that is configured to, based on a determination result of the determination unit, set the passageway modifying mechanism to a state selected from the group consisting of the first state and the second state,
**characterized in that** the determination unit is configured to determine whether a first condition, wherein the water temperature detected by the water temperature detection unit is within a preset first temperature range, is met; and
if the determination unit determines that the first condition is met, then the operation unit is configured to set the passageway modifying mechanism to the first state.

2. The radiator according to claim 1, further comprising:
a second piping (**5d**), wherethrough the water flows from the heat exchanger side to the heat source unit side; and
a bypass piping (**5e**), which diverts the water from the first piping to the second piping without passing the water through the heat exchanger;
wherein,
if the passageway modifying mechanism assumes the second state, then the water flows from the first piping to the second piping via the bypass piping.

3. The radiator according to claim 2, wherein
the passageway modifying mechanism is a three-way valve.

4. The radiator according to any one of the preceding claims, further comprising:
an indoor temperature detection unit **(55)** that is capable of detecting an indoor temperature, which is the temperature of an indoor space subject to the cooling and/or the heating;
wherein,
the determination unit calculates a second temperature range based on a detection result of the indoor temperature detection unit and determines whether a second condition, wherein the water temperature detected by the water temperature detection unit is within the second temperature range, is met; and
if the determination unit determines that the first condition and the second condition are met, then the operation unit sets the passageway modifying mechanism to the first state.

## Patentansprüche

1. Radiator (50) der durch Ziehen von kaltem oder heißem Wasser von einer Wärmequelleneinheit (10) kühlt oder heizt, aufweisend:
einen Wärmetauscher (52);
einen ersten Leitungssatz (5a), durch den Wasser von der Seite der Wärmequelleneinheit zu der Seite des Wärmetauschers fließt;
einen Durchgangsänderungsmechanismus (54), der einen ersten Zustand, wobei dieser einen Wasserfluss von der Seite der Wärmequelleneinheit zur Seite des Wärmetauschers erlaubt, und
einem zweiten Zustand, wobei der Wasserfluss von der Seite der Wärmequelleneinheit zur Seite des Wärmetauschers blockiert ist, annimmt;
eine Wassertemperaturermittelungseinheit (56), die zum Ermitteln einer Wassertemperatur, welche die Temperatur des Wassers, das zum Wärmetauscher fließt, ist, geeignet ist; und
eine Regelungseinheit (60), die aufweist:
eine Bestimmungseinheit (66), die ausgestaltet ist zu bestimmen, ob die durch die
Wassertemperaturermittelungseinheit ermittelte Wassertemperatur innerhalb eines vorgeschriebenen Temperaturbereichs liegt; und
eine Operationseinheit (64), die ausgestaltet ist, den Durchgangsänderungsmechanismus, basierend auf einem Bestimmungsergebnis der Bestimmungseinheit, in einen Zustand, der aus der Gruppe, die aus einem ersten Zustand und einem zweiten Zustand besteht, zu wählen ist, zu versetzten,
**dadurch gekennzeichnet, dass** die Bestimmungseinheit ausgestaltetet ist zu bestimmen, ob eine erste Bedingung, nämlich ob die durch die Wassertemperaturermittelungseinheit ermittelte Wassertemperatur innerhalb eines voreingestellten ersten Temperaturbereichs liegt, erfüllt ist, und
die Operationseinheit so ausgestaltet ist, dass sie den Durchgangsänderungsmechanismus in den ersten Zustand versetzt, falls die Bestimmungseinheit bestimmt, dass die erste Bedingung erfüllt ist.

2. Radiator nach Anspruch 1, ferner aufweisend:
einen zweiten Leitungssatz (5d), durch den das Wasser von der Seite des Wärmetauschers zu der Seite der Wärmequelleneinheit fließt; und
eine Nebenleitung (5e), die das Wasser von dem ersten Leitungssatz zum zweiten Leitungssatz umleitet, ohne das Wasser durch den Wärmetauscher zu leiten;
wobei,
das Wasser vom ersten Leitungssatz zum zweiten Leitungssatz durch die Nebenleitung fließt, wenn der Durchgangsänderungsmechanismus den zweiten Zustand annimmt.

3. Radiator nach Anspruch 2, wobei
der Durchgangsänderungsmechanismus ein Dreiwegeventil ist.

4. Radiator nach einem der vorangegangenen Ansprüche, ferner aufweisend:
eine Innenraumtemperaturermittelungseinheit (55), die geeignet ist, eine Innenraumtemperatur zu ermitteln, welche die Temperatur eines Innenraumvolumens ist, das gekühlt oder geheizt werden soll;
wobei,
die Bestimmungseinheit, basierend auf einem von der Innenraumtemperaturermittelungseinheit ermittelten Resultat, einen zweiten Temperaturbereich berechnet und bestimmt, ob eine zweite Bedingung, nämlich ob die durch die Wassertemperaturermittelungseinheit ermittelte Wassertemperatur innerhalb des zweiten Temperaturbereichs liegt, erfüllt ist; und
falls die Bestimmungseinheit bestimmt, dass die erste und die zweite Bedingung erfüllt sind, die Operationseinheit den Durchgangsänderungsmechanismus in den ersten Zustand versetzt.

## Revendications

1. Radiateur (50) qui refroidit et/ou chauffe par aspiration de l'eau froide ou de l'eau chaude à partir d'une unité de source de chaleur (10), comprenant :
un échangeur de chaleur (52) ;
une première tuyauterie (5a), à travers laquelle l'eau s'écoule depuis le côté unité de source de chaleur vers le côté échangeur de chaleur ;
un mécanisme de modification de passage (54) qui adopte un premier état, dans lequel un écoulement de l'eau depuis le côté unité de source de chaleur vers le côté échangeur de chaleur est autorisé, et un deuxième état, dans lequel l'écoulement de l'eau depuis le côté unité de source de chaleur vers le côté échangeur de chaleur est bloqué ;
une unité de détection de température d'eau (56) qui est capable de détecter une température d'eau, qui est la température de l'eau s'écoulant vers l'échangeur de chaleur ; et une unité de commande (60) qui comprend :
une unité de détermination (66), configurée pour déterminer si la température de l'eau détectée par l'unité de détection de température d'eau se trouve dans une plage de température prescrite ; et
une unité d'actionnement (64), qui est configurée pour régler, sur la base d'un résultat de détermination de l'unité de détermination, le mécanisme de modification de passage à un état choisi dans le groupe constitué du premier état et du deuxième état,
**caractérisé en ce que** l'unité de détermination est configurée pour déterminer si une première condition, dans laquelle la température de l'eau détectée par l'unité de détection de température d'eau se trouve dans une première plage de température prédéfinie, est satisfaite ; et,
si l'unité de détermination détermine que la première condition est satisfaite, alors l'unité d'actionnement est configurée pour régler le mécanisme de modification de passage au premier état.

2. Radiateur selon la revendication 1, comprenant en outre :
une deuxième tuyauterie (5d), à travers laquelle l'eau s'écoule depuis le côté échangeur de chaleur vers le côté unité de source de chaleur ; et
une tuyauterie de dérivation (5e), qui dérive l'eau de la première tuyauterie vers la deuxième tuyauterie sans faire passer l'eau à travers l'échangeur de chaleur ;
dans lequel,
si le mécanisme de modification de passage adopte le deuxième état, alors l'eau s'écoule depuis la première tuyauterie vers la deuxième tuyauterie par l'intermédiaire de la tuyauterie de dérivation.

3. Radiateur selon la revendication 2, dans lequel
le mécanisme de modification de passage est une soupape à trois voies.

4. Radiateur selon l'une quelconque des revendications précédentes, comprenant en outre :
une unité de détection de température intérieure (55) qui est capable de détecter une température intérieure, qui est la température d'un espace intérieur soumis au refroidissement et/ou au chauffage ;
dans lequel,
l'unité de détermination calcule une deuxième plage de température sur la base d'un résultat de détection de l'unité de détection de température intérieure et détermine si une deuxième condition, dans laquelle la température de l'eau détectée par l'unité de détection de température d'eau se trouve dans la deuxième plage de température, est satisfaite ; et
si l'unité de détermination détermine que la première condition et la deuxième condition sont satisfaites, alors l'unité d'actionnement règle le mécanisme de modification de passage au premier état.
